# EUROPÄISCHE PATENTSCHRIFT

(11) **EP 1 819 207 B1**
(45) Veröffentlichungstag und Bekanntmachung des Hinweises auf die Patenterteilung: **16.09.2009**
(21) Anmeldenummer: 07405034.5
(22) Anmeldetag: 06.02.2007
(51) Int. Cl.: H05B 41/282

(54) **Verfahren und Vorrichtung zum Zünden einer Fluoreszenz-Lampe**
Method and device for switching on a fluorescent lamp
Procédé et dispositif destinés à l'allumage d'une lampe fluorescente

(30) Priorität: 09.02.2006 CH 2082006
(43) Veröffentlichungstag der Anmeldung: 15.08.2007
(73) Patentinhaber: Sander Elektronik AG, 5314 Kleindöttingen (CH)
(72) Erfinder: Noé, Michel, 6314 Unterägeri (CH); Schneider, Pierre, 5314 Kleindöttingen (CH)
(74) Vertreter: Frei Patent Attorneys

(56) Entgegenhaltungen:
- WO-A-20/05032219
- WO-A-20/05039251
- DE-A1-102004 027 373
- DE-U1- 9 318 071
- US-A1- 2003 173 907

## Beschreibung

Die Erfindung betrifft eine Zündvorrichtung und ein Zündverfahren für eine Fluoreszenz-Lampe, insbesondere zur Anwendung in einer Notleuchte während eines Notbetriebs. Die Erfindung bezieht sich auf eine elektronische Schaltung und ein Zündverfahren zur Zündung einer akkubetriebenen Fluoreszenz-Lampe gemäss dem Oberbegriff der entsprechenden unabhängigen Patentansprüche.

### STAND DER TECHNIK

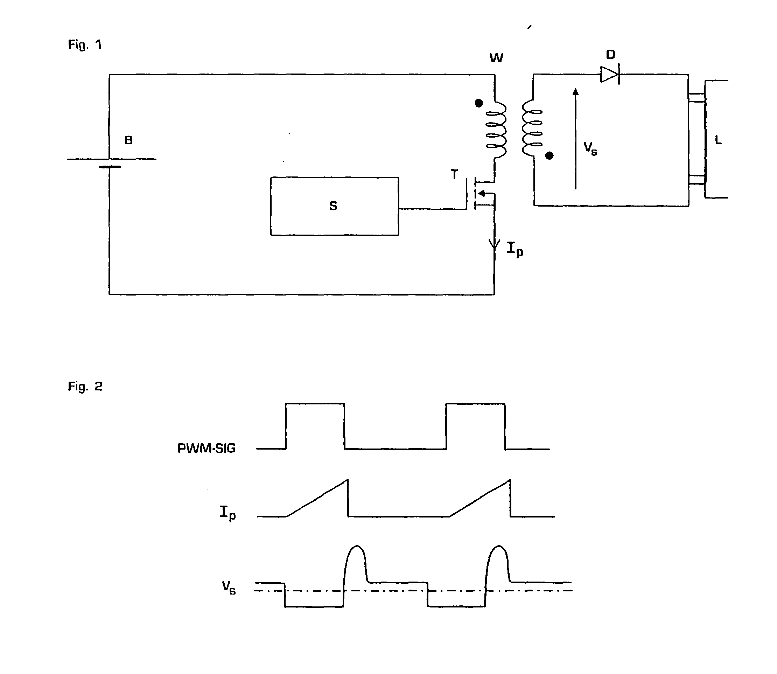

Der Konverter, welcher in einer Notleuchte mit Fluoreszenz-Lampe eingebaut wird, um das Leuchtmittel zu zünden, kann als Eintakt-Sperrwandler (Flyback converter) gebaut werden. Auf der Figur 1 ist ein solcher Konverter gezeichnet. Der Transistor T (Bipolar oder Mosfet) wird geschaltet. Der Strom fliesst aus der Batterie B in der Primär-Wicklung des Wandlers W. Die Diode D verhindert den Stromfluss auf der Sekundär-Seite. Somit wird die Energie aus der Batterie B in der Induktivität der Primär-Wicklung gespeichert. Wenn der Transistor T blockiert wird, steigt die Sekundär-Spannung, bis der Strom in der Sekundär-Wicklung fliessen kann. Sobald der Transistor T wieder eingeschaltet wird, ist die Diode D blockiert, und die Energie kann wieder im Wandler gespeichert werden. Ein solcher Konverter ist allgemein bekannt, und wird seit mehr als 20 Jahren für die Notbeleuchtung angewendet.

Der Vorteil einer solchen Anwendung für die Notbeleuchtung liegt in der Eigenschaft der Fluoreszenz-Lampe. Damit das Gas in einem solchen Leuchtmittel ionisiert sein kann, muss zuerst eine sehr hohe Spannung entstehen. Wenn das Gas leitet, bzw. der Strom in der Lampe fliesst, reduziert sich die Spannung auf einem niedrigeren Wert, der vom Leuchtmittel abhängt. Somit kann eine Fluoreszenz-Lampe mit zwei reihengeschalteten Zener-Dioden modelliert werden. Der Durchlassspannungswert dieser Zener-Dioden ist abhängig vom Lampen-Zustand (leitend oder blockiert). Da der Eintakt-Sperrwandler eine Stromquelle bildet, sind solche unterschiedliche Werte kein Hindernis für die Übertragung der Energie zum Leuchtmittel. Damit ist er gut geeignet, um die Fluoreszenz-Lampe zu zünden. Der Verlauf eines PWM-Steuersignals "PWM-Sig", des Primärstromes Ip sowie der Sekundär-Spannung Vs auf der Sekundär-Seite über die Zeit ist auf der Figur 2 gezeigt. Die Nulllinie für die Spannung Vs ist durch eine punktstrichlierte Linie dargestellt.

Wenn elektronische Module (Notlichtelemente) für die Notbeleuchtung entwickelt werden, sind zwei Ziele gesetzt:
- so wenig verschiedene Typen wie möglich. D.h., dass im besten Fall das gleiche Notelement für alle Fluoreszenz-Lampentypen eingesetzt werden kann (von 4W-bis 120W- Leuchtmitteln).
- wenig Aufwand. D.h., dass die Batterie so klein wie möglich sein muss, bzw. die Anzahl der Zellen so klein wie möglich sein muss.

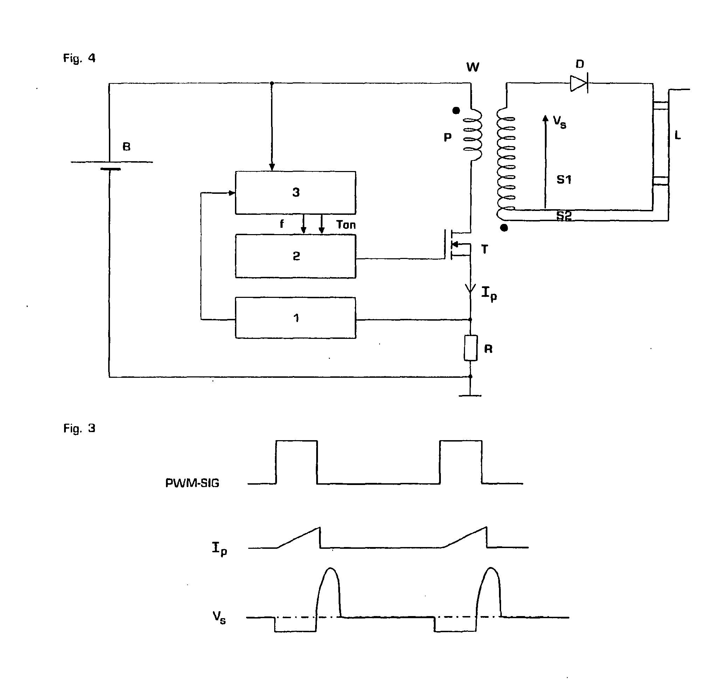

Mit herkömmlichen Konvertern bzw. Konverter-Regelungsverfahren ist es schwierig, beide Ziele zu erreichen. Wenn zu niedrige Batterie-Leistungen mit Fluoreszenz-Lampen mit höheren Leistungen kombiniert werden, kann die Lampe nur kurz gezündet werden. Wie in Figur 3 gezeigt, ist die Spannung Vs an der Sekundärseite über einen Grossteil einer Periode praktisch Null, und das Gas dem entsprechend auch nur relativ kurz ionisiert. Der Stromfluss Ip wird auf der Sekundär-Seite unterbrochen. Die Lichtleistung der Lampe in einem solchen Zustand ist viel zu niedrig, und die Lebensdauer der Lampe wird reduziert.

### DARSTELLUNG DER ERFINDUNG

Es ist deshalb Aufgabe der Erfindung, eine elektronische Schaltung und ein Zündverfahren zur Zündung einer akkubetriebenen Fluoreszenz-Lampe der eingangs genannten Art zu schaffen, welche die oben genannten Nachteile behebt.

Diese Aufgabe lösen eine elektronische Schaltung und ein Zündverfahren zur Zündung einer akkubetriebenen Fluoreszenz-Lampe mit den Merkmalen der entsprechenden unabhängigen Patentansprüche.

Es ist also die elektronische Schaltung zur Zündung einer akkubetriebenen Fluoreszenz-Lampe ein Eintakt-Sperrwandler mit einem elektronischen Schalter, und weist die folgenden Steuerkomponenten auf:
- eine PWM-Signal-Steuerung, welche anhand von zwei Steuerparametern, einer Frequenz und einer Einschaltdauer, ein PWM-Signal zur Steuerung des elektronischen Schalters des Sperrwandlers bildet,
- eine Stromsteuerung, welche den Entladestrom der Batterie kontrolliert, indem sie die beiden Steuerparameter des PWM-Signals bestimmt und an die PWM-Signal-Steuerung übermittelt.

Die Stromsteuerung trennt die Zündung in zwei nacheinander auftretende Vorgänge, in eine Startphase und eine Normalphase, wobei die Stromsteuerung während der Normalphase den Entladestrom auf einen Nennwert einstellt, und während der Startphase den Entladestrom auf einem höheren Wert als den Nennwert einstellt, indem sie die Pulsbreite bzw. die Einschaltdauer vorgibt, und, und die Frequenz konstant hält. In der Normalphase verändert die Stromsteuerung, um den Strom auf dem Nennwert einzustellen, die Frequenz, ohne dabei den letzten Wert der Einschaltdauer, welche am Ende der Startphase erreicht wurde, zu verändern.

Diese Veränderung der Frequenz, wie auch die Veränderung der Einschaltdauer ist vorzugsweise als Regelung, anhand des Entladestromes ausgeführt. Der Entladestrom kann dazu selber gemessen werden, oder aus einer Messung der Batteriespannung berechnet werden. Die dazu benötigte Messeinrichtung (wie Sensoren, A/D-Wandler, Filter) respektive Berechnungsmittel (wie ein Mikrocontroller oder eine analoge Schaltung) werden dabei zusammenfassend als Strombestimmungsmittel bezeichnet. In einer weiteren bevorzugten Ausführungsform der Erfindung sind die Strombestimmung und die Bestimmung der Steuerparameter des PWM-Signals in einer einzigen Funktion kombiniert, ohne dass der Primärstrom explizit bestimmt wird. Diese Funktion wird als Steuerwertbestimmungsmittel bezeichnet. In einer bevorzugten Ausführungsform der Erfindung sind das Strombestimmungsmittel oder die Steuerwertbestimmungsmittel durch tabellierte Funktionen implementiert.

Der Eintakt-Sperrwandler (flyback converter), der die Fluoreszenz-Lampe im Notbetrieb zündet, wird also mit einem Puls-Breite-Modulierung (PWM) Verfahren gesteuert. Während der Startphase wird die Frequenz konstant gehalten, und wird der Batterie-Entlade-Strom auf einem höheren Wert (z.B. das doppelte) als der Nennwert geregelt, um eine sichere Zündung zu gewährleisten. Um diesen höheren Wert zu regeln, wird die Modulierung des PWM-Signals verändert. Am Ende der Startphase (z.B. nach 5 Sekunden) gibt es eine bestimmte Dauer für den On-Zustand (in dem der PWM-Ausgang aktiv ist). Nach der Startphase, d.h. in der Normalphase, muss der Strom reduziert, und auf dem Nennwert geregelt werden. Die Dauer des On-Zustandes, welche am Ende der Startphase erreicht wurde, wird dabei konstant gehalten. Die Regelung oder Steuerung des Batterie-Entlade-Stromes auf dem Nennwert erfolgt über eine Veränderung der PWM-Frequenz. Diese wird in der Normalphase nach und nach reduziert, bis der Batterie-Entlade-Strom den Nennwert erreicht hat. Dieser Nennwert kann konstant sein, wie es bestimmte Normen für Notbeleuchtungen vorschreiben, oder von der Batteriespannung beeinflusst werden, damit die Leistung, welche von der Batterie im Notbetrieb entnommen wird, konstant gehalten wird.

Mit der Erfindung ist ein Verfahren beschrieben, welches mit einer möglichst niedrigen Batterie-Leistung eine trotzdem sichere und saubere Zündung gewährleistet, Damit ist es möglich, ein Notelement zu entwickeln, welches ein breites Spektrum der Leuchtmittel umfasst (z.B. 6W- bis 80W-Leuchtmittel) und nur mit kleinen Batterien arbeitet (z.B. 4 reihengeschaltete 4Ah-NiCd-Zellen für 3 Stunden Notbetrieb). Je nach dem effektiv vorhandenen Leuchtmittel passt sich die Schaltung vorzugsweise automatisch an und stellt sich auf eine Einschaltdauer TON ein, welche eine zuverlässige Zündung bewirkt.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Schaltung zum Betrieb einer Fluoreszenz (FL)-Lampe gemäss dem Stand der Technik;
- Figur 2: einen Signalverlauf bei dauernder Ionisierung der FL-Lampe;
- Figur 3: einen Signalverlauf bei unterbrochener Ionisierung der FL-Lampe; und
- Figur 4: eine Schaltung zum Betrieb einer Fluoreszenz-Lampe gemäss der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

In der Figur 4 ist ein Konverter gezeichnet. Er weist die folgenden Leistungskomponenten auf:
- Wandler W. Der Wandler W ist mit der zusätzlichen Wicklung S2 auf der Sekundärseite gezeichnet, welche das Leuchtmittel L einseitig vorheizen kann. Mit dieser Vorheizung kann die Lebensdauer des Leuchtmittels L verlängert werden. Natürlich kann der Konverter auch ohne Vorheizung funktionieren.
- Transistor T. Dieser Transistor dient als elektronischer oder "solid-state" Schalter ist als Mosfet gezeichnet. Natürlich kann der Konverter auch mit anderen Halbleiter-Technologien gebaut werden.
- Diode D. Unter gewissen Umständen ist es möglich, auf diese Diode D zu verzichten, da das Leuchtmittel L den Stromfluss blockieren kann, auch wenn der Transistor T leitet. Die Diode D ist nötig, wenn das Leuchtmittel-Spektrum sehr breit sein muss, und die kleinen Leistungen auch betrieben werden müssen.

Ausserdem weist der Konverter die folgenden Steuerkomponenten auf:
- Strommessung und Filterung 1: Der Entladestrom Ip der Batterie B wird gemessen und das Messsignal wird gefiltert. Die Messung erfolgt, wie in der Figur gezeichnet, auf der Verbindung zum Batterie-Minuspol, kann alternativ auch auf der Verbindung zum Batterie-Pluspol gemacht werden. Die Messung kann über einen Widerstand (Shunt) R erfolgen, oder alternativ auch über Hall-Sensoren oder andere herkömmliche Verfahren.
- PWM-Signal-Steuerung 2: Dieses Teil erzeugt das Steuersignal, welches den Transistor T ein- bzw. ausschaltet. Es gibt zwei Parameter, die das Signal bestimmen: Die Frequenz f und die Dauer TON. Während der Dauer TON ist der Transistor T eingeschaltet, wobei der Strom Ip in der Primär-Wicklung P fliesst.
- Stromregelung oder Stromsteuerung 3: Der Entlade-Strom Ip wird mit einem Soll-Wert verglichen, und die Steuerparameter der PWM-Signal-Steuerung werden berechnet.

Zur Strommessung ist noch das Folgende zu bemerken:_Die Verbindung zwischen der Strommessung und Filterung 1 und dem Strompfad deutet die Messung nur schematisch an; wenn dazu beispielsweise die Spannung über dem Shunt R gemessen wird, sind natürlich zwei elektrische Anschlüsse erforderlich.

Die Messung eines Sensorsignals - Spannung am Shunt R oder an einem Hall-Element etc. - geschieht vorzugsweise mit einem mehrstufigen A/D-Wandler oder beispielsweise mit zwei Komparatoren, deren Schwellwerte durch die Strommessung und Filterung 1 einstellbar sind und dauernd nachgeführt werden.

Die Strommessung und Filterung 1 liefert einen gefilterten Wert für den Primärstrom Ip, vorzugsweise einen Mittelwert des über eine Periode variierenden Stromes. Die Filterung kann in bekannter Weise durch analoge oder digitale Mittel vor respektive nach der A/D-Wandlung geschehen.

Natürlich können die drei Steuer-Funktionen Strommessung und Filterung 1, PWM-Signal-Steuerung 2 und Stromsteuerung 3 vollständig oder teilweise mit einem Mikrokontroller realisiert werden.

Wenn ein Mikroprozessor oder Mikrocontroller verwendet wird, kann in einer anderen bevorzugten Ausführungsform der Erfindung auf die Strommessung und Filterung verzichtet werden: Solange der Eintakt-Sperrwandler im so genannten "discontinuous mode" arbeitet, ist der Stromverlauf so wie in den Figuren 2 oder 3 gezeichnet, wobei er immer beim Wert Null beginnt. Das heisst, dass die am Ende der Periode im Wandler gespeicherte Energie praktisch auf Null gesunken ist. Somit kann der Strom berechnet werden: Anhand von Werten von Batteriespannung, Pulsbreite, Pulsfrequenz und Primärinduktivität P des Sperrwandlers berechnet der Mikroprozessor respektive Mikrocontroller den theoretischen Primärstrom Ip oder Entladestrom der Batterie, ohne diesen messen zu müssen.

In einer weiteren bevorzugten Ausführungsform der Erfindung wird die Berechnung ersetzt durch eine Tabelle von im Voraus berechneten und gespeicherten Werten ("look-up table"), die im Speicher des Mikrocontrollers abgelegt ist. Anhand der gemessenen Batteriespannung und der PWM-Frequenz wird der zugeordnete theoretische Tabellenwert für den Primärstrom Ip aus dem Speicher geholt. Es ist auch eine gemischte Implementation möglich, in welcher Abhängigkeiten von bestimmten Parametern durch eine Tabelle und Abhängigkeiten von anderen Parametern durch eine Berechnung ausgedrückt sind. Der Einfluss der über die Zeit konstanten aber je nach Gerät variierenden Primärinduktivität P wird bei der Berechnung der Tabelle berücksichtigt, indem die Primärinduktivität P nach der Produktion gemessen wird.

Bei einer weiteren Variante einer solchen Implementation sind auch Abhängigkeiten innerhalb der Stromsteuerung 3 in der Tabelle erfasst. Dadurch ist die explizite Berechnung des theoretischen Primärstromes Ip sowie die Berechnung in der Stromsteuerung 3 anhand dieses Wertes Ip eliminiert worden. Es sind dabei die Steuerparameter f und TON selber in der Tabelle gespeichert und werden in Abhängigkeit der Batteriespannung ausgelesen.

In noch einer weiteren Variante der Erfindung wird der Einfluss der Batteriespannung vernachlässigt. In dieser Variante weist die Tabelle nur zwei Wertepaare von f und TON auf: eines für die Startphase und eines für die Normalphase. Die Werte dieser Parameter sind a priori so gewählt, dass sie in beiden Phasen, unabhängig von den individuellen Eigenschaften des Leuchtmittels sicher zündet.

Im folgenden wird die Steuerung des Stromes im Detail beschrieben: Bei einem Betrieb der Lampe, insbesondere einem Notbetrieb gibt es zwei nacheinander auftretende Vorgänge:

### 1. Startphase.

Während dieser Startphase (auch Boostphase genannt) wird das Leuchtmittel mit einem höheren Strom gezündet. Damit wird eine sichere Zündung gewährleistet. Beispielweise kann der Batterie-Entlade-Strom während fünf Sekunden auf den dreifachen Nennwert geregelt werden. Die Regelung erfolgt wie folgt: Am Anfang wird die maximale Frequenz (z.B. 25kHz) und ein TON-Anfangswert (z.B. 10us) an die PWM-Signal Steuerung übermittelt. Der Batterie-Entlade-Strom Ip wird gemessen, und nach einer gewissen Zeitverzögerung, welche von der Frequenz und von der Strom-Messung-Filterung abhängt, wird der TON-Wert schrittweise geändert, um den Unterschied zwischen dem Ist-Wert von Ip aus der Messung gegenüber einem Sollwert von Ip für die Startperiode zu verkleinem.Dieser Vorgang wird wiederholt, bis der Unterschied klein genug wird. Alternativ kann auch ein anderes Regelverfahren wie beispielsweise ein P-Regler oder PI-Regler eingesetzt werden. Während der Startphase wird dadurch der Batterie-Entlade-Strom Ip auf einem höheren Wert als beim Normalbetrieb geregelt. Dementsprechend sollte die an das Leuchtmittel übertragene Leistung genügend sein, um eine saubere Zündung unter allen Umständen zu sichern. Der Strom Ip und die Sekundär Spannung Vs sollten dabei wie in der Figur 2 gezeichnet aussehen. Am Ende dieser Startphase beträgt der TON-Wert einen bestimmten Wert TON-end, welcher vom Leuchtmittel abhängig ist. Dieser Wert kann also nicht im voraus bekannt sein kann, weil die elektronische Steuerung für ein breites Spektrum von Leuchtmitteln verwendet werden kann. Ausserdem hängt der TON-end Wert von der Temperatur und vom Leuchtmittel-Alter ab.

### 2. Normalphase.

Der Batterie-Entlade-Strom Ip hat einen Nennwert, welcher von der Batterie-Kapazität und der gewünschten Betriebsdauer im Notbetrieb abhängt. Ausserdem wird dieser Strom von einer entsprechenden Norm für Notleuchten vorgegeben. Es ist möglich, diesen Nennwert von der Batteriespannung leicht zu beeinflussen. Damit ist es möglich, statt einer Stromregelung eine Leistungsregelung zu verwirklichen: Entsprechend dem TON-end Wert, welche am Ende der Startphase erreicht wurde, gibt es eine gewisse TON-end-Energie, die im Wandler bei jedem Zyklus gespeichert wird. Diese TON-end-Energie wird bei jedem Zyklus an das Leuchtmittel übertragen, und mit dieser TON-end-Energie wird das Leuchtmittel sauber gezündet. D.h., dass beim Abschalten des Transistors T das Gas ionisiert wird, und dass der Strom für die verbleibende Dauer (TOFF) der Periode im Sekundär-Kreis weiter fliessen wird, so dass das Gas auch für diese verbleibende Dauer ionisiert bleibt. Die entsprechenden Signale sehen so aus, wie in der Figur 2 gezeichnet.

Nach der Startphase soll der Sollwert der Stromregelung auf den Nennwert reduziert werden. Dabei wird der TON-end Wert beibehalten, damit die übertragene TON-end-Energie immer für eine saubere Zündung reicht. Dabei ist es aber auch möglich, den TON-end-Wert leicht zu variieren, wobei immer noch die Vorteile der Erfindung vorliegen. Insbesondere kann der Wert von TON in der Normalphase leicht gegenüber dem TON-end-Wert erhöht werden. Um die aus der Batterie entnommene Leistung zu regeln, wird die Frequenz einfach reduziert. Diese Regelung auf die reduzierte Frequenz erfolgt schrittweise, ähnlich wie bei der Stromregelung in der Startphase. Der TON-Wert bleibt dabei im Wesentlichen konstant, gleich dem TON-end-Wert. Vorzugsweise wird der TON-Wert um nicht mehr als 15% oder 10% oder 5% um den TON-end-Wert herum, in positiver oder in negativer Richtung, variiert.

## Patentansprüche

1. Elektronische Schaltung zur Zündung einer akkubetriebenen Fluoreszenz-Lampe (L), welche Schaltung als Eintakt-Sperrwandler mit einem elektronischen Schalter, insbesondere einem Transistor (T), gebaut ist und die folgenden Steuerkomponenten aufweist:
• eine PWM-Signal-Steuerung (2), welche anhand von zwei Steuerparametern, einer Frequenz (f) und einer Einschaltdauer (TON), ein PWM-Signal zur Steuerung des elektronischen Schalters (T) des Sperrwandlers bildet,
• eine Stromsteuerung (3), welche den Entladestrom (Ip) der Batterie (B) kontrolliert, indem sie die beiden Steuerparameter (f, TON) des PWM-Signals bestimmt und an die PWM-Signal-Steuerung (2) übermittelt,
wobei die Stromsteuerung (3) die Zündung in zwei nacheinander auftretende Vorgänge trennt, in eine Startphase und einer Normalphase, und die Stromsteuerung (3) während der Normalphase den Entladestrom (Ip) auf einen Nennwert einstellt, und während der Startphase den Entladestrom (Ip) auf einem höheren Wert als den Nennwert einstellt, indem sie die Pulsbreite bzw. die Einschaltdauer (TON) vorgibt, und, und die Frequenz (f) konstant hält,
**dadurch gekennzeichnet, dass** in der Normalphase die Stromsteuerung (3), um den Strom (Ip) auf dem Nennwert einzustellen, die Frequenz (f) verändert, ohne dabei den letzten Wert der Einschaltdauer (TON), welche am Ende der Startphase erreicht wurde, wesentlich zu verändern.

2. Elektronische Schaltung gemäss Anspruch 1, wobei in der Normalphase die Stromsteuerung (3) den letzten Wert der Einschaltdauer (TON), welche am Ende der Startphase erreicht wurde, um nicht mehr als 15% verändert.

3. Elektronische Schaltung gemäss Anspruch 2, aufweisend ein Strombestimmungsmittel zur Bestimmung eines repräsentativen Wertes für den Entladestrom oder Primärstrom (Ip), wobei die Stromsteuerung (3) mindestens einen der Steuerparameter (f, TON) des PWM-Signals anhand dieses repräsentativen Wertes anpasst.

4. Elektronische Schaltung gemäss Anspruch 3, wobei das Strombestimmungsmittel eine Mess- und Filterschaltung (1) zum Bestimmen eines gemessenen Wertes des Primärstroms (Ip) durch eine Messung mit anschliessender Filterung ist.

5. Elektronische Schaltung gemäss Anspruch 4, wobei die Mess- und Filterschaltung (1), den Primärstrom (Ip) über einen Widerstand (R) und einen Verstärker misst und filtert und **dadurch** einen zeitlichen Mittelwert des Primärstromes (Ip) bestimmt.

6. Elektronische Schaltung gemäss Anspruch 3, wobei das Strombestimmungsmittel zur Bestimmung eines theoretischen Wertes für den Primärstrom (Ip) anhand einer Messung der Batteriespannung ausgebildet ist.

7. Elektronische Schaltung gemäss Anspruch 6, wobei das Strombestimmungsmittel zur Berechnung des theoretischen Wertes für den Primärstrom (Ip) anhand der Messung der Batteriespannung, einer Primär-Induktivität (P) des Sperrwandlers und der Steuerparameter (f, TON) des PWM-Signals ausgebildet ist.

8. Elektronische Schaltung gemäss Anspruch 6, wobei das Strombestimmungsmittel zur Auslesen des theoretischen Wertes für den Primärstrom (Ip) anhand der Messung der Batteriespannung aus einer gespeicherten Tabelle ausgebildet ist.

9. Elektronische Schaltung gemäss Anspruch 1, aufweisend ein Steuerwertbestimmungsmittel zur Bestimmung der Steuerparameter (f, TON) des PWM-Signals anhand einer gemessenen Batteriespannung, insbesondere durch Auslesen der Steuerparameter (f, TON) für die Normalphase und für die Startphase jeweils aus einer entsprechenden Tabelle in Abhängigkeit der Batteriespannung.

10. Notleuchte, enthaltend eine elektronische Schaltung zur Zündung einer Fluoreszenz-Lampe (L) gemäss Anspruch 1.

11. Verfahren zur Zündung einer akkubetriebenen Fluoreszenz-Lampe (L), welche Lampe (L) eine Schaltung mit einem Eintakt-Sperrwandler mit einem elektronischen Schalter, insbesondere einem Transistor (T), aufweist, wobei das Verfahren die folgenden Schritte aufweist:
• Bilden eines PWM-Signals zur Steuerung des elektronischen Schalters (T) des Sperrwandlers durch eine PWM-Signal-Steuerung (2), anhand von zwei Steuerparametern, einer Frequenz (f) und einer Einschaltdauer (TON),
• Bestimmen der beiden Steuerparameter (f, TON) des PWM-Signals und Übermitteln der beiden Steuerparameter (f, TON) an die PWM-Signal-Steuerung (2) durch eine Stromsteuerung (3), welche **dadurch** den Entladestrom (Ip) der Batterie (B) kontrolliert,
• Trennen der Zündung in zwei nacheinander auftretende Vorgänge; in eine Startphase und einer Normalphase,
• während der Normalphase: Einstellen des Entladestroms (Ip) durch die Stromsteuerung (3) auf einen Nennwert;
• während der Startphase: Einstellen des Entladestroms (Ip) durch die Stromsteuerung (3) auf einem höheren Wert als den Nennwert, indem die Stromsteuerung (3) die Pulsbreite bzw. die Einschaltdauer (TON) vorgibt, und die Frequenz (f) konstant hält,
**dadurch gekennzeichnet, dass** in der Normalphase die Stromsteuerung (3), um den Strom (Ip) auf dem Nennwert einzustellen, die Frequenz (f) verändert, ohne dabei den letzten Wert der Einschaltdauer (TON), welche am Ende der Startphase erreicht wurde, wesentlich zu verändern.

12. Verfahren gemäss Anspruch 11, wobei in der Normalphase der letzte Wert der Einschaltdauer (TON), welche am Ende der Startphase erreicht wurde, um nicht mehr als 15% verändert wird.

## Claims

1. Electronic circuit for the ignition of a rechargeable battery powered fluorescent lamp (L), which circuit is designed as single-ended flyback converter with an electronic switch, in particular a transistor (T) and comprises the following control components:
• a PWM signal control (2), which by means of two control parameters, a frequency (f) and a duty cycle (TON), forms a PWM signal for control of the electronic switch (T) of the flyback converter,
• a current control (3), which controls the discharge current (Ip) of the battery (B) by determining the two control parameters (f, TON) of the PWM signal and transmitting them to the PWM signal control (2),
wherein the current control (3) separates the ignition into two successive processes, into a start phase and a normal phase and the current control (3) during the normal phase adjusts the discharge current (Ip) to a nominal value and during the start phase adjusts the discharge current (Ip) to a higher value than the nominal value by determining the pulse-width or the duty cycle (TON) and maintaining the frequency constant,
**characterized in that** in the normal phase the current control (3), in order to adjust the current (Ip) to the nominal value, changes the frequency (f), without substantially changing the last value of the duty cycle (TON), which was achieved at the end of the start phase.

2. Electronic circuit according to claim 1, wherein in the normal phase the current control (3) does not change the last value of the duty cycle (TON), which was achieved at the end of the start phase, by more than 15%.

3. Electronic circuit according to claim 2, comprising a current determining means for determination of a representative value for the discharge current or primary current (Ip), wherein the current control (3) adapts at least one of the control parameters (f, TON) of the PWM signal by means of this representative value.

4. Electronic circuit according to claim 3, wherein the current determining means is a measuring and filtering circuit (1) for determination of a measured value of the primary current (Ip) by means of measuring with subsequent filtering.

5. Electronic circuit according to claim 4, wherein the measuring and filtering circuit (1) measures and filters the primary current (Ip) through a resistor (R) and an amplifier and thus determines a temporal mean value of the primary current (Ip).

6. Electronic circuit according to claim 3, wherein the current determining means is designed for determination of a theoretical value for the primary current (Ip) by means of a measurement of the battery voltage.

7. Electronic circuit according to claim 6, wherein the current determining means is designed for calculation of the theoretical value for the primary current (Ip) from the measurement of the battery voltage, a primary inductance (P) of the flyback converter and of the control parameters (f, TON) of the PWM signal.

8. Electronic circuit according to claim 6, wherein the current determining means is designed for retrieving the theoretical value for the primary current (Ip) according to the measurement of the battery voltage from a stored table.

9. Electronic circuit according to claim 1, comprising a control value determining means for determination of the control parameters (f, TON) of the PWM signal by means of a measured battery voltage, in particular by retrieving the control parameters (f, TON) for the normal phase and for the start phase each from a corresponding table in dependence of the battery voltage.

10. Emergency lamp comprising an electronic circuit for ignition of a fluorescent lamp (L) according to claim 1.

11. Method for ignition of a rechargeable battery powered fluorescent lamp (L), which lamp (L) comprises a circuit with a single-ended flyback converter with an electronic switch, in particular a transistor (T), wherein the method comprises the following steps:
• forming a PWM signal for control of the electronic switch (T) of the flyback converter by a PWM signal control (2) by means of two control parameters, a frequency (f) and a duty cycle (TON),
• determining of the two control parameters (f, TON) of the PWM signal and transmitting the two control parameters (f, TON) to the PWM signal control (2) by means of a current control (3), which thus controls the discharge current (Ip) of the battery (B),
• separating of the ignition into two successively occurring processes; into a start phase and a normal phase,
• during the normal phase: adjustment of the discharge current (Ip) by the current control (3) to a nominal value
• during the start phase: adjustment of the discharge current (Ip) by the power control to a higher value than the nominal value by determining the pulse width or the duty cycle (TON) respectively and maintaining the frequency constant,
**characterized in that** in the normal phase the current control (3), in order to adjust the current (Ip) to the nominal value, changes the frequency (f), without substantially changing the last value of the duty cycle (TON), which was achieved at the end of the start phase.

12. Method according to claim 11, wherein in the normal phase the last value of the duty cycle (TON), which was achieved at the end of the start phase is not changed by more than 15%.

## Revendications

1. Circuit électronique d'allumage d'une lampe à fluorescence (L) alimentée par accumulateur, lequel circuit étant formé comme convertisseur de blocage à cadence unique doté d'un commutateur électronique, en particulier un transistor (T), et présentant les composants de commande suivants :
- une commande (2) à signal en impulsions à largeur modulée (PWM) qui forme à l'aide de deux paramètres de commande, à savoir une fréquence (f) et une durée de branchement (TON) un signal PWM qui commande le commutateur électronique (T) du convertisseur de blocage,
- une commande de courant (3) qui contrôle le courant (Ip) de décharge de la batterie (B) en déterminant les deux paramètres de commande (f, TON) du signal PWM et en les transmettant à la commande (2) à signal PWM,
la commande de courant (3) divisant l'allumage en deux opérations successives, à savoir une phase de démarrage et une phase normale, la commande de courant (3) réglant le courant de décharge (Ip) à une valeur nominale pendant la phase normale et la commande de courant (3) réglant le courant de décharge (Ip) à une valeur supérieure à la valeur nominale pendant la phase de démarrage en définissant la largeur des impulsions ou durée de branchement (TON) tout en maintenant constante la fréquence (f),
**caractérisé en ce que**
pendant la phase normale, la commande de courant (3) modifie la fréquence (f) pour régler le courant (Ip) à la valeur nominale sans pour autant modifier considérablement la dernière valeur de la durée de branchement (TON) qui a été atteinte à la fin de la phase de démarrage.

2. Circuit électronique selon la revendication 1,
**caractérisé en ce que** pendant la phase normale, la commande de courant (3) ne modifie pas de plus de 15 % la dernière valeur de la durée de branchement (TON) qui a été atteinte à la fin de la phase de démarrage.

3. Circuit électronique selon la revendication 2,
présentant un moyen de détermination du courant qui détermine une valeur représentative du courant de décharge ou courant primaire (Ip), la commande de courant (3) adaptant au moins un des paramètres de commande (f, TON) du signal PWM à l'aide de cette valeur représentative.

4. Circuit électronique selon la revendication 3,
**caractérisé en ce que** le moyen de détermination du courant est un circuit (1) de mesure et de filtrage qui détermine une valeur de mesure du courant primaire (Ip) par une mesure suivie d'un filtrage.

5. Circuit électronique selon la revendication 4,
**caractérisé en ce que** le circuit (1) de mesure et de filtrage mesure et filtre le courant primaire (Ip) par l'intermédiaire d'une résistance (R) et d'un amplificateur, pour ainsi déterminer la valeur de la moyenne temporelle du courant primaire (Ip).

6. Circuit électronique selon la revendication 3,
**caractérisé en ce que** le moyen de détermination du courant est configuré pour déterminer une valeur théorique du courant primaire (Ip) à l'aide de la mesure de la tension de la batterie.

7. Circuit électronique selon la revendication 6,
**caractérisé en ce que** le moyen de détermination du courant est configuré pour calculer la valeur théorique du courant primaire (Ip) à l'aide de la mesure de la tension de la batterie, de l'inductance primaire (P) du convertisseur de blocage et des paramètres de commande (f, TON) du signal PWM.

8. Circuit électronique selon la revendication 6,
**caractérisé en ce que** le moyen de détermination du courant est configuré pour lire la valeur théorique du courant primaire (Ip) en mesurant la tension de la batterie dans un tableau conservé en mémoire.

9. Circuit électronique selon la revendication 1,
présentant un moyen de détermination d'une valeur de commande qui détermine les paramètres de commande (f, TON) du signal PWM à l'aide de la tension mesurée sur la batterie, en particulier par lecture des paramètres de commande (f, TON) pour la phase normale et pour la phase de démarrage dans des tableaux respectifs, en fonction de la tension de la batterie.

10. Lampe de secours contenant un circuit électronique d'allumage d'une lampe à fluorescence (L) selon la revendication 1.

11. Procédé d'allumage d'une lampe à fluorescence (L) alimentée par accumulateur, la lampe présentant un convertisseur de blocage à cadence unique doté d'un commutateur électronique, en particulier un transistor (T), et présentant les étapes suivantes :
- à l'aide de deux paramètres de commande, à savoir une fréquence (f) et une durée de branchement (TON), formation d'un signal PWM qui commande le commutateur électronique (T) par une commande (2) à signal PWM,
- détermination des deux paramètres de commande (f, TON) du signal PWM et transmission des deux paramètres de commande (f, TON) à la commande (2) à signal PWM par une commande de courant (3) qui contrôle ainsi le courant de décharge (Ip) de la batterie,
- division de l'allumage en deux opérations successives, à savoir une phase de démarrage et une phase normale, tandis que :
- pendant la phase normale, le courant de décharge (Ip) est réglé à une valeur nominale par la commande de courant (3),
- pendant la phase de démarrage, le courant de décharge (Ip) est réglé à une valeur plus élevée que la valeur nominale par la commande de courant (3) qui définit la largeur des impulsions ou durée de branchement (TON) et qui maintient constante la fréquence,
**caractérisé en ce que**
pendant la phase normale, la commande de courant (3) modifie la fréquence (f) pour régler le courant (Ip) à la valeur nominale sans pour autant modifier considérablement la dernière valeur de la durée de branchement (TON) qui a été atteinte à la fin de la phase de démarrage.

12. Procédé selon la revendication 11, **caractérisé en ce que** pendant la phase normale, la dernière valeur de la durée de branchement (TON) qui a été atteinte à la fin de la phase de démarrage n'est pas modifiée de plus de 15 %.
